# EUROPÄISCHE PATENTSCHRIFT

(11) **EP 2 508 057 B1**
(45) Veröffentlichungstag und Bekanntmachung des Hinweises auf die Patenterteilung: **25.07.2018**
(21) Anmeldenummer: 12152556.2
(22) Anmeldetag: 26.01.2012
(51) Int. Cl.: A01B 69/00, B60C 23/06

(54) **Vorrichtung und Verfahren zur Überwachung der Befahrbarkeit eines Bodens**
Device and method for monitoring whether a surface can be driven on
Dispositif et procédé destinés à la surveillance de la maniabilité d'un sol

(30) Priorität: 07.04.2011 DE 102011001858
(43) Veröffentlichungstag der Anmeldung: 10.10.2012
(73) Patentinhaber: CLAAS Selbstfahrende Erntemaschinen GmbH, 33428 Harsewinkel (DE)
(72) Erfinder: Behnke, Willi, 33803 Steinhagen (DE)

(56) Entgegenhaltungen:
- EP-A1- 1 785 287
- EP-A1- 2 135 498
- WO-A1-01/50835

## Beschreibung

Die Erfindung betrifft ein Verfahren und eine Vorrichtung zur Überwachung der Befahrbarkeit des Bodens durch selbstfahrende landwirtschaftliche Arbeitsmaschinen gemäß den Oberbegriffen der Ansprüche 1 und 9 und eine selbstfahrende landwirtschaftliche Arbeitsmaschine, die mit einer solchen Vorrichtung ausgestattet ist.

Derartige Überwachungsverfahren mit optischen Sensoren im Bereich der Spur, der Fahrzeugreifen und des unmittelbaren Bodenumfelds werden bei Arbeitsfahrzeugen eingesetzt, um die Belastung der Fahrbahn beziehungsweise des Bodens zu erfassen und dadurch bedingt Parameter der Arbeitsmaschinen zu optimieren bzw. Arbeitsabläufe den Gegebenheiten anzupassen.

Die EP 2 135 498 beschreibt ein Kamerasystem, das den Bereich vor der landwirtschaftlichen Arbeitsmaschine erfasst. Durch Vergleiche der aktuellen Bilder mit gespeicherten, zeitlich vorher erfassten Bildern, wird die tatsächliche Bewegung der Arbeitsmaschine bestimmt. Diese Ergebnisse werden mit den erwarteten Bewegungen, die zum Beispiel aus odometrischen Messungen oder Lenkeinschlagsmessungen erfolgen, verglichen und die Abweichungen ausgewertet. Hieraus kann der Schlupf oder die Drift der Arbeitsmaschine berechnet und dadurch auf die Bodenbeschaffenheit rückgeschlossen werden. Bei diesem System ist eine Reihe von verschiedenen Sensoren notwendig, um aus den Ergebnissen der verschiedenen Sensoren, die Befahrbarkeitsparameter zu bestimmen. Die Vielzahl der Sensoren macht dieses System komplex und teuer.

Die DE 10 2008 063 852 beschreibt die Messung der Beschaffenheit von verdichteter Silobefüllung. Aus der Veränderung der Höhe eines überfahrenden Verdichtungsfahrzeuges wird auf den lokalen Verdichtungszustand des Siloinhaltes geschlossen und so die Verdichtungsfahrzeuge zu den Bereichen geleitet, die noch verdichtet werden müssen. Nachteil dieser Verdichtungsmessung ist, dass sie ortsfest installiert sein muss oder, im Falle einer mobilen Messeinheit, sie jedes Mal neu aufgestellt und kalibriert werden muss. Der Einsatz der Geräte bleibt auf die Verdichtung von Silogut beschränkt.

Die Befahrbarkeit von weicherem Untergrund kann verbessert werden, indem die Reifenaufstandsfläche des Fahrzeuges erhöht wird. Dieses wird dadurch erreicht, indem der Reifendruck verringert wird. Die DE 41 09 392 beschreibt ein Reifendruckregelsystem, das zum Beispiel die angenommene, aus odometrischen Messungen abgeleitete, und die tatsächliche, durch Radarsensoren gewonnene Geschwindigkeit misst und daraus den Schlupf berechnet, um gegebenenfalls durch Absenken des Reifendrucks die Standfestigkeit des Fahrzeuges zu erhöhen. Eine Anzahl von Sensoren muss bei diesem System zusammenspielen, um die notwendigen Parameter der Befahrbarkeit zu ermitteln. Da sich der Abrollradius des Reifens mit dem Reifendruck verändert, ist eine Ungenauigkeit in dem System gegeben, die eine genaue Messung nicht möglich macht.

Die DE 103 29 937 beschreibt ein Reifendruckregelsystem, bei dem eine gewählte Reifenaufstandsfläche beibehalten werden soll, indem der Reifendruck in Abhängigkeit von der Gewichtsbelastung des Reifens geregelt wird. Die Befahrbarkeit des Bodens wird vorab bestimmt und eingestellt; geregelt wird allein der Reifendruck, um die Reifenaufstandsfläche trotz des zunehmenden Gewichts konstant zu halten. Auf eine Veränderung der Bodenbeschaffenheit reagiert das System nicht.

Die EP 1 785 287 A1 beschreibt ein System zur Erkennung der Einwirkungen eines von einem Reifen eines Fahrzeugs befahrenen Bodens sowie auf den Boden an sich. Die Bodenbeschaffenheit wird mittels elektrischer Schaltkreis, die auf dem Reifen angeordnet sind, erfasst. Die Verformung, die der Reifen beim Befahren des Bodens erfährt, wird durch eine Sensoreinrichtung erfasst, die grundsätzlich im Inneren des Reifens angeordnet ist.

Nachteile der bekannten Systeme zur Überwachung der Befahrbarkeit von Böden sind zum einen das Messen nur weniger Parameter, die dann keine angemessene Reaktion auf gerade sich ändernde Gegebenheiten zulassen, zum anderen, dass eine große Anzahl von unterschiedlicher Sensoren notwendig ist, um daraus einen ausreichenden Parametersatz zur Bestimmung der Befahrbarkeit zu ermitteln.

Der Erfindung liegt die Aufgabe zugrunde, mit möglichst einem Sensor viele Parameter zur Überwachung der Befahrbarkeit des Bodens zu gewinnen und somit ein umfassendes, kostengünstiges System bereitzustellen, dass es erlaubt, das landwirtschaftliche Arbeitsfahrzeug und/oder die Arbeitsabläufe optimal auf die Bodenverhältnisse einzustellen.

Diese Aufgabe wird erfindungsgemäß durch die kennzeichnenden Merkmale des Anspruch 1 und des Anspruch 8 gelöst. Selbstfahrende landwirtschaftliche Arbeitsmaschinen sind Traktoren, Mähdrescher, Feldhäcksler sowie alle anderen selbstfahrenden landwirtschaftlichen Bearbeitungsgeräte. In der Regel fahren diese landwirtschaftlichen Arbeitsmaschinen auf Reifen. Auf asphaltierten Straßen und anderen befestigten Wegen dringen die Reifen nicht in den Boden ein und hinterlassen keine Spuren. Auf den Arbeitsflächen, sei es z.B. Grünland, Ackerflächen oder Waldboden, ist der Boden weicher. Die Reifen drücken den Boden ein und hinterlassen so eine Fahrspur.

Die Lösung der Aufgabe besteht in einem Verfahren zur Überwachung der Befahrbarkeit des Bodens durch eine selbstfahrenden landwirtschaftlichen Arbeitsmaschine, die mit mindestens einem optischen Sensor ausgestattet ist, wobei wenigstens eine von der Arbeitsmaschine hinterlassene Spur durch den mindestens einen Sensor zumindest abschnittsweise optisch erfasst wird und dass durch Bildauswertung Rückschlüsse auf die Bodenbeschaffenheit gezogen werden. Dabei wird durch den optischen Sensor außer der Spur des Reifens auch den Boden neben der Spur erfasst. Dies erlaubt eine einfachere, genauere und schnellere Bestimmung der Parameter.

Durchgeführt wird dieses Verfahren von einer Vorrichtung zur Überwachung der Befahrbarkeit des Bodens durch eine selbstfahrenden landwirtschaftlichen Arbeitsmaschine die mindestens einen optischen Sensor, der wenigstens eine von von einem Reifen der Arbeitsmaschine hinterlassene Spur sowie auch den Boden neben der Spur zumindest abschnittsweise optisch erfasst, und eine Bildanalyseeinrichtung umfasst, die aus den von dem mindestens einen optischen Sensor erfassten Informationen die Bodenbeschaffenheit repräsentierende Parameter errechnet.

Da der optische Sensor wenigstens eine Fahrspur unmittelbar hinter einem der Reifen der landwirtschaftlichen Arbeitsmaschine zumindest abschnittsweise erfasst, werden die Parameter unmittelbar gewonnen und geben somit die momentane Bodenbeschaffenheit wieder.

Eine bevorzugte Ausführungsform des optischen Sensors ist eine Kamera; besonders geeignet ist eine 3D-Kamera. Ebenso kann hierzu aber auch eine 2D-Kamera oder PMD Kamerasensoren verwendet werden. Die Informationen zur Befahrbarkeit können aus einem Bild oder aus Bilderserien, auch Bildsequenzen genannt, gewonnen werden. Der Vorteil als optischen Sensor eine 3D-Kamera zu verwenden besteht darin, durch stereoskopische Auswertungen von Einzelaufnahmen eine größere Anzahl von Parametern bestimmen zu können, als es beispielsweise bei einer 2D-Kamera möglich wäre.

Vorzugsweise kann zu der Fahrspur zumindest der untere Teil des Reifens erfasst werden. Idealerweise wird zusätzlich hierzu auch der Boden neben der Fahrspur erfasst. Diese Erweiterung der Bilderfassung erlaubt, wie unten weiter ausgeführt, eine größere Anzahl von Parametern zu bestimmen.

Zur Beurteilung der Befahrbarkeit können folgende Informationen herangezogen werden:
- die Fahrspurtiefe, verursacht durch die Bodenkomprimierung,
- die Bodenverdrängung, die bei sehr feuchten Böden entsteht,
- die Bodenbeschädigung, die durch die Stollenabdrücke bei einer Grasnabe entsteht,
- die Bodenverschiebung, die durch die Stollen entsteht, wenn Schlupf vorhanden ist,
- die Schlupfgröße, die zwischen Reifen und Boden entstehen,
- die Drift des Fahrzeuges, die häufig bei Seitenhängen auftritt.

Die gewonnenen Parameter der Bodenbeschaffenheit können verschieden genutzt werden. Sie können dem Fahrer des Fahrzeuges, genau wie die unmittelbar getätigten Aufnahmen, angezeigt werden, so dass der Fahrer als Reaktion auf eine Änderung der Bodenbeschaffenheit den Luftdruck der Reifen ändern kann, um eine optimale Belastung des Bodens zu erreichen, und/oder das Gewicht des Fahrzeugs durch Entladen verringert, und/oder den Allradantrieb und/oder die Differentialsperre hinzu- oder abschaltet. Die von dem Fahrer durchführbaren Maßnahmen sind nur Beispiele, die keinen Anspruch auf Vollständigkeit erheben.

Eine bevorzugte Ausführung der Vorrichtung ist, dass die Parameter der Bodenbeschaffenheit durch eine Steuerungsvorrichtung der Arbeitsmaschine verarbeitbar sind und dass diese Parameter von der Steuerungsvorrichtung zur Steuerung der Arbeitsmaschine verwendbar sind. Das bevorzugte Verfahren hierbei ist, dass die ermittelten Informationen über die Bodenbeschaffenheit für das Betreiben der Arbeitsmaschine herangezogen werden. Die Parameter fließen in die automatische Fahrzeugsteuerung ein, so dass die Einstellungen des Fahrzeugs automatisch durch die Steuervorrichtung erfolgen und nur beim Passieren eines Grenzwertes ein Warnsignal an den Fahrer abgegeben wird. Somit ist die Maschine selbsttätig in der Lage, unmittelbar auf Veränderungen der Bodenbeschaffenheit zu reagieren und sich ihnen anzupassen.

Das Verfahren kann auch dahingehend genutzt werden, dass die Rückschlüsse auf die Bodenbeschaffenheit zur Bodenkartierung herangezogen werden. Hierzu werden die Parameter zum Beispiel über drahtlose Kommunikationsmittel an externe Geräte übergeben, die eine Kartierung des Bodens erstellen. Diese Kartierung kann für spätere Arbeitsgänge wie zum Beispiel spezielle Bodenbearbeitung oder Düngung oder das nachfolgende Befahren des Bodens genutzt werden.

Des Weiteren kann das Verfahren dahingehend genutzt werden, dass die Rückschlüsse auf die Bodenbeschaffenheit zur Information weiterer, den Boden befahrender Arbeitsmaschinen genutzt werden. Wird beispielsweise die Bodenbelastung durch Zuladung von Erntegut einer Arbeitsmaschine zu hoch, kann automatisch ein Überladefahrzeug geordert werden.

Bei größeren landwirtschaftlichen Arbeitsmaschinen empfiehlt es sich, nicht nur einen Reifen und dessen Spur zu überwachen, sondern mindestens auf jeder Seite einen Reifen und dessen Spur zu überwachen oder gar alle Räder mit einem solchen optischen Sensor auszustatten.

### Ausführungsbeispiele

Anhand der nachstehenden Beschreibung und den zugehörigen Zeichnungen wird die Erfindung näher erläutert. Es zeigten:
- Fig. 1: eine Vorderansicht einer Reifen-Sensor-Anordnung in einer gegebenen Situation,
- Fig. 2: eine Vorderansicht einer Reifen-Sensor-Anordnung mit einer anderen Bodengegebenheit,
- Fig. 3: eine Draufsicht einer Reifen-Sensor-Anordnung,
- Fig. 4: eine schematische Darstellung einer selbstfahrenden landwirtschaftlichen Arbeitsmaschine mit Sensoren und Verarbeitungs- und Darstellungseinrichtungen.

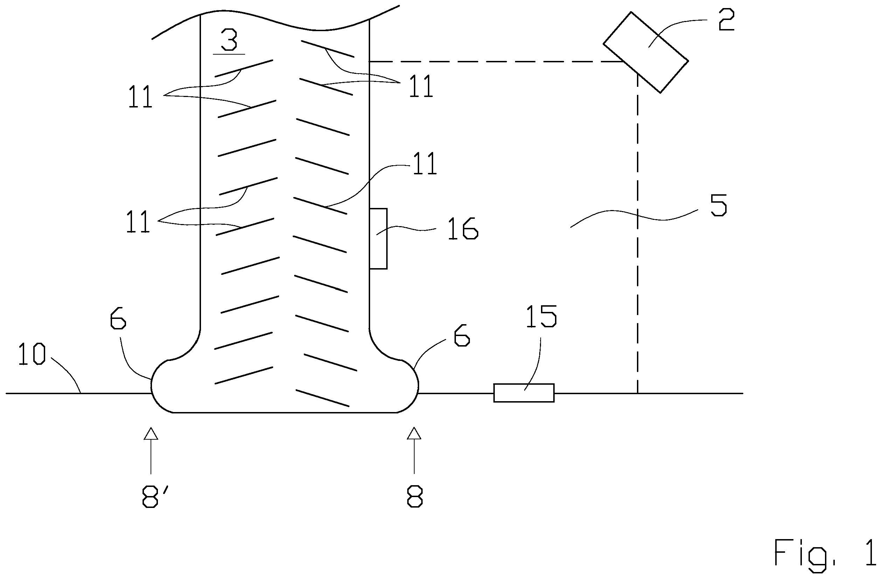

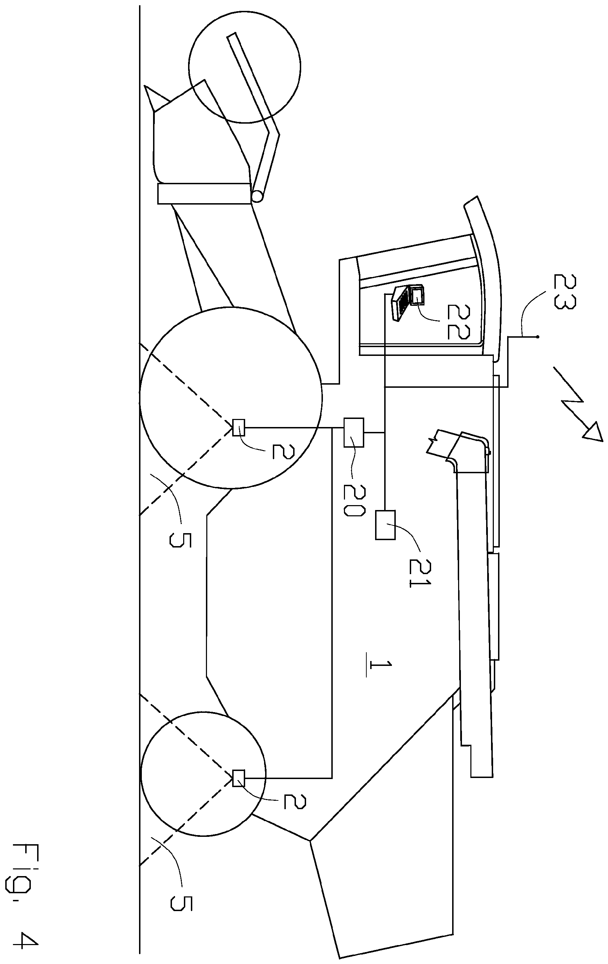

In Fig. 1 ist eine Reifen-Sensor-Anordnung einer selbstfahrenden landwirtschaftlichen Arbeitsmaschine 1, wie sie beispielhaft in Fig. 4 angedeutet ist, dargestellt. Ein optischer Sensor 2 ist bevorzugt als eine 3D-Kamera ausgeführt, es kann sich aber auch um eine 2D- oder eine PMD-Kamera handeln. Der als Kamera ausgeführte Sensor 2 ist fest mit der selbstfahrenden Arbeitsmaschine 1 verbunden. Bevorzugt, aber nicht notwendigerweise, ist der Sensor 2 an einer den Reifen tragenden Welle befestigt, da damit eine fixe Beziehung zwischen dem Reifen 3 und dem Sensor 2 besteht, wodurch auf das Ermitteln von Referenzwerten für Reifenparameter bei der Bildauswertung, wie zum Beispiel den Abrollradius oder die Laufrichtung des Rades, verzichtet werden kann.

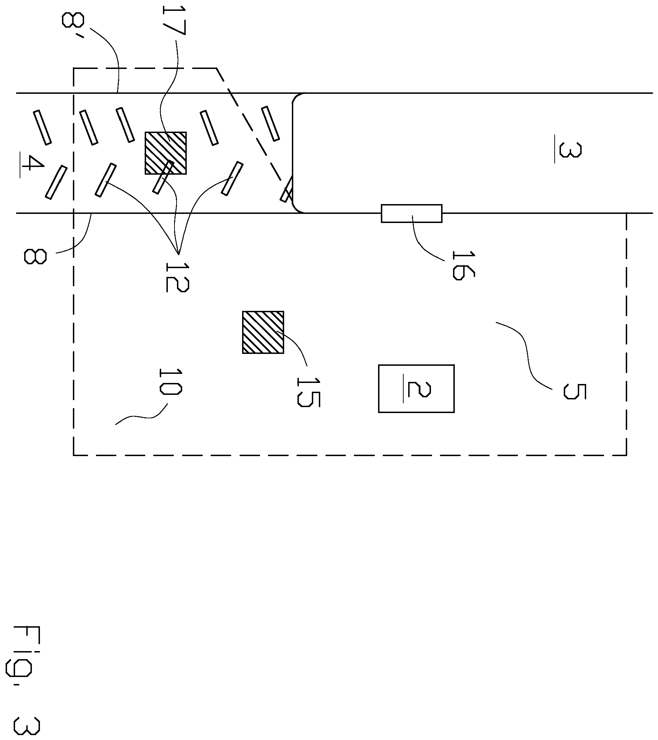

Der Sichtbereich 5 des Sensors 2 erfasst in der Fig. 1 den unteren Bereich des Reifens 3 und den Boden 10 neben dem Reifen 3, wo der Sensor 2 eine erste Referenzfläche 15 des Bodens 10 zur Auswertung heranzieht. Aus dieser Sicht ist nicht erkennbar, wie der Sichtbereich 5 des Sensors 2 auch die Spur 4 hinter dem Reifen erfasst. Dargestellt ist die Reifenverformung 6 am Boden 10, die von dem Sensor 2 miterfasst wird. Diese Reifenverformung 6 ist ein Merkmal für den Reifendruck, die Gewichtsbelastung und die Reifenaufstandsfläche. Die Breite des Reifenaufstands entspricht dem Abstand zwischen den Punkten 8 und 8'. Diese hier gezeigten Punkte 8 und 8' stellen im Laufe der Bewegung der landwirtschaftlichen Arbeitsmaschine, wie in Fig. 3 gezeigt, den Rand der Spur 4 dar.

Weiterhin ist eine zweite Reifenreferenzfläche 16 des Reifens 3 in Fig. 1 eingezeichnet, die für einen Vergleich herangezogen wird. Aus der Analyse der Abfolge der von der Kamera erfassten Bilder kann eine Bildanalyseeinrichtung 20 die Rotationsgeschwindigkeit des Reifens 3 ermitteln und diese zum Beispiel zur Bestimmung des Schlupfs verwenden.

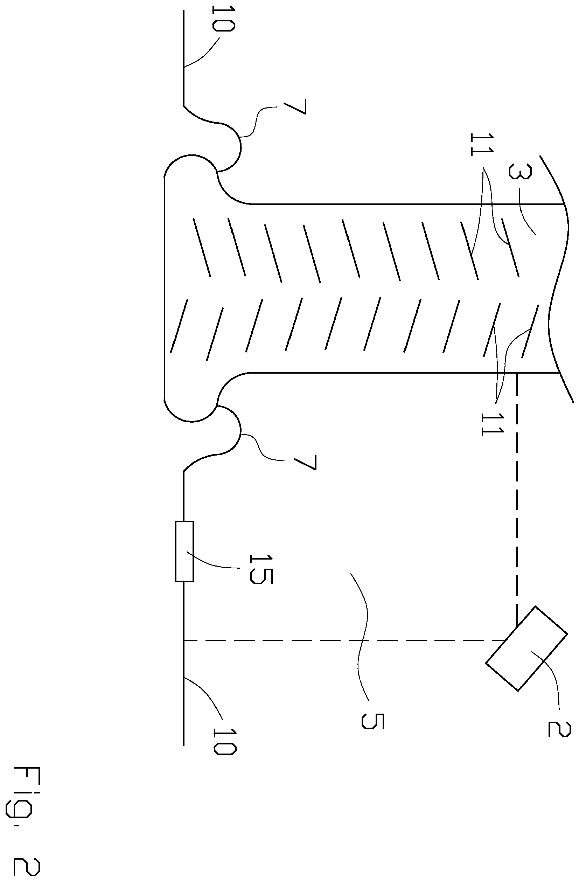

In der Fig. 2 ist eine Reifen-Sensor-Anordnung einer selbstfahrenden landwirtschaftlichen Arbeitsmaschine 1 unter anderen Bodenbedingungen dargestellt. Im Gegensatz zu der in Fig. 1 dargestellten Situation, bei der der Boden 10 durch die Last, die auf der Aufstandsfläche liegt, verdichtet wird, ist in der Fig. 2 die Situation auf sehr feuchten Böden dargestellt. Beim Befahren wird der Boden 10 nicht nur verdichtet, er wird auch verdrängt und quillt neben dem Reifen 3 hervor, wo er in Fahrtrichtung gesehen einen Wall 7, 7' ausbildet. Der auf der dem Sensor 2 zugewandten Seite befindliche Wall 7 liegt im Erfassungsbereich 5 des Sensors 2 und die Bildanalyseeinrichtung 20 kann die verdrängte Masse bestimmen wie beispielsweise durch die Bestimmung der Höhe und dem Abstand eines Walls 7, 7' zum Reifen 3. Hierauf kann die Steuerung der landwirtschaftlichen Arbeitsmaschine 1 entsprechend reagieren.

Die Fig. 3 zeigt eine Reifen-Sensor-Anordnung in der Draufsicht. Der Sichtbereich 5 des Sensors 2 ist gestrichelt dargestellt und erfasst neben dem Reifen 3 und dem Boden 10 neben der Spur den Spurbereich, die Spur 4 selbst mit ihren seitlichen Rändern 8 und 8'. In der Spur 4 sind die von Stollen 11 des Reifenprofils erzeugten Stollenabdrücke 12 sichtbar.

Ebenfalls skizziert sind die erste Referenzfläche 15 des Bodens 10 neben der Spur 4, die zweite Referenzfläche 16 des Reifens 3 zur Erfassung der Reifenbewegung und eine dritte Referenzfläche 17 für die Spur 4. Die jeweiligen Referenzflächen 15, 16, 17 können für jede Anwendung entsprechend gewählt werden. Die hier skizzierte Form, Größe und Position sind nur ein Ausführungsbeispiel; die einzelnen Referenzflächen 15, 16, 17 können beliebig verändert werden.

In der Fig. 4 ist beispielhaft eine selbstfahrende landwirtschaftliche Arbeitsmaschine 1 dargestellt. Die selbstfahrende landwirtschaftliche Arbeitsmaschine 1 ist dadurch gekennzeichnet, dass mindestens ein an der Arbeitsmaschine angeordneter optischer Sensor 2 eine vom Reifen der Arbeitsmaschine hinterlassene Spur 4 zumindest abschnittsweise optisch erfasst, dass eine Bildanalyseeinrichtung 20 daraus Rückschlüsse auf die Bodenbeschaffenheit zieht und dass die ermittelten Informationen über die Bodenbeschaffenheit für das Betreiben der selbstfahrenden landwirtschaftlichen Arbeitsmaschine 1 verwendbar sind. Jedem Reifen 3 ist vorliegend ein optischer Sensor 2 zugeordnet, der den unteren Teil des Reifens 3, die durch das Befahren erzeugte Spur 4 und einen Teil des Bodens 10 neben der Spur erfasst. Die aufgenommenen Bilder werden an die Bildanalyseeinrichtung 20 geleitet, wo die gesuchten Parameter aus einzelnen Bildern oder aus Bildsequenzen gewonnen werden. Diese Parameter können, wie die aufgezeichneten Bilder selbst, dem Fahrer auf einem Display 22 angezeigt werden. Der Fahrer kann darauf reagieren und die Arbeitsmaschine 1 so einstellen, dass sie optimal eingesetzt werden kann.

Bevorzugt werden die von der Bildanalyseinrichtung 20 gewonnenen Parameter einer Steuervorrichtung 21 zugeführt, wobei die Steuervorrichtung 21 diese Parameter benutzt, um die landwirtschaftliche Arbeitsmaschine 1 optimal auf die Gegebenheiten einstellen zu können. Zusätzlich können die Parameter auch auf dem Anzeigendisplay 22 dargestellt werden, um dem Fahrer über die gegebene Situation zu informieren. Desweiteren können die Parameter zum Beispiel über eine Funkverbindung 23 an einen externen Empfänger übermittelt werden. Dort können die Daten zur Erstellung einer Bodenzustandskarte benutzt werden oder sie werden weiteren Fahrzeugen übermittelt, um diese über den Bodenzustand zu informieren. Werden die Daten zur Steuerung der Arbeitsvorgänge benutzt, kann zum Beispiel ein Überladefahrzeug für eine Erntemaschine geordert werden, wenn das Gesamtgewicht der Erntemaschine für den Boden zu groß wird.

Im Folgenden werden einige Beispiele gegeben, wie verschiedene Parameter aus den Bildern des Sensors 2 gewonnen werden können. Als Sensor 2 wird hierbei eine 3D-Kamera gewählt:
Eine Bestimmung der Spurtiefe kann anhand der Fig. 3 erläutert werden. Für die Bestimmung der Spurtiefe wird bei der Auswertung der Stereobilder der 3D-Kamera mit trigonometrischen Berechnungen der senkrechte Abstand der beiden Referenzflächen 15 und 17 zum Sensor 2 bestimmt. Die Differenz der beiden senkrechten Abstände ergibt die Tiefe der Spur 4.

Eine besondere Ausprägung des Verfahrens ist, dass der optische Sensor 2 die Bodenverdrängung 7 neben der Spur 4, wie in der Fig.2 dargestellt, zumindest einseitig erfasst. Bestimmt die Bildanalyseeinrichtung 20 zum Beispiel die Höhe der Verdrängung 7 und deren Breite durch den Abstand vom Reifen 3, so können beide Parameter zumindest als relatives Maß der Bodenverdrängung genutzt werden.

Eine andere Anwendung der oben erläuterten Messung der Spurtiefe ist die Bestimmung von Bodenbeschädigungen durch Stollenabdrücke 12. Die in der Fig. 4 gezeigte Referenzfläche 17 der Spur 4 ist hierzu nicht geeignet. Wird nun diese dritte Referenzfläche 17 so gewählt, dass sie kleiner als ein Stollenabdruck 12 ist, so kann aus fortlaufenden Bildsequenzen eine Veränderung die Spurtiefe bestimmt werden; diese schwankt um die Tiefe des Stollenabdrucks 12.

Aus der Fig. 3 kann ersehen werden, dass die Reifenaufstandsbreite durch die Vermessung der Stolleneindrücke 12 beziehungsweise durch das Messen des Abstandes der beiden Spurränder 8 und 8' bestimmt werden kann. Mit Hilfe diverser, in der Steuervorrichtung 21 der Arbeitsmaschine hinterlegten Reifenparametern errechnet die Bildanalyseeinrichtung 20 die sich daraus ergebende Reifenaufstandsfläche.

Ein anderes Auswertungsbeispiel wird anhand einer der Figuren 1 bis 3 erläutert. Aus einer aufgenommenen Bildsequenz des Sensors 2 ermittelt die Bildanalyseeinrichtung 20 durch Vergleiche der Referenzflächen 15 die Vorwärtsbewegung beziehungsweise die Vorwärtsgeschwindigkeit der landwirtschaftlichen Arbeitsmaschine 1. Gleichzeitig gewinnt die Bildanalyseeinrichtung 20 durch den Vergleich der Referenzflächen 16 des Reifens 3 die Rotationsgeschwindigkeit desselben. Durch das oben beschriebene Bestimmen der Spurtiefe kann die Bildanalyseeinrichtung 20 den tatsächlichen Abrollradius des Reifens 3 errechnen und damit bestimmen, ob die Rotationsgeschwindigkeit des Reifens 3 mit der Fortbewegung der landwirtschaftlichen Arbeitsmaschine 1 übereinstimmt. Vorteil dieses Verfahrens zur Bestimmung des Schlupfs ist, dass durch die Bestimmung des exakten Rollradius des Reifens 3 der Schlupf sehr früh erkannt werden kann, auch dann schon, wenn er noch gering ist, was bei anderen Systemen durch deren Ungenauigkeiten bei der Bestimmung des Schlupfs nicht möglich ist.

Ein weiteres Auswertungsbeispiel ist die Bestimmung der Drift. Veranschaulichen kann man es sich in der Fig. 3. Aus einer aufgenommenen Bildsequenz des Sensors 2 ermittelt die Bildanalyseeinrichtung 20 durch Vergleiche der ersten Referenzflächen 15 die Bewegung der landwirtschaftlichen Arbeitsmaschine 1, um eine etwaige Drift der Arbeitsmaschine 1 beispielsweise bei Seitenhanglage zu bestimmen. Besteht zum Beispiel eine feste Verbindung zwischen dem Sensor 2 und der Nabe des Reifens 3, so ist die Sollbewegungsrichtung des Reifens 3 vorgegeben. Besteht keine feste Verbindung, weil der Sensor zum Beispiel am Chassis der landwirtschaftlichen Arbeitsmaschine 1 befestigt ist, so muss die Laufrichtung trigonometrisch bestimmt werden. Weicht die Sollbewegungsrichtung, die durch die Stellung des Reifens 3 gegeben ist, von der tatsächlichen Bewegungsrichtung ab, so driftet die Arbeitsmaschine 1 und die Steuervorrichtung 21 kann korrigierend in den Betrieb der landwirtschaftlichen Maschine 1 eingreifen.

Diese Auswertungsbeispiele sind nur exemplarisch, sie können auch durch andere Analysemethoden bestimmt werden. Weiterhin können mit dem Verfahren durchaus noch weitere Parameter bestimmt werden. Bei der Verwendung einer 2D-Kamera kann nicht immer ein Einzelbild zur Bestimmung von Parametern herangezogen werden. Hier sind dann mindestens zwei Bilder notwendig. Der erste Schritt der Auswertung ist dann, den Abstand des Sensors 2 zwischen den beiden Aufnahmen zu bestimmen. Anschließend ist eine Stereobildauswertung möglich.

Die Befahrbarkeitsüberwachung des Bodens 10 kann zu verschiedenen Steuerungen von selbstfahrenden landwirtschaftlichen Arbeitsmaschinen 1 direkt oder zur Steuerung von Arbeitsvorgängen genutzt werden. Im Folgenden werden einige Anwendungsbeispiele gegeben.

Ein erstes Anwendungsbeispiel betrifft die Reifendruckregelung in Abhängigkeit von der Eindringtiefe in den Boden 10. Überschreitet die Spurtiefe eines Reifens 3 eine gewisse, vorgegebene Größe, so kann die Steuervorrichtung 21 den Reifendruck absenken, um so die Aufstandsfläche des Reifens 3 zu erhöhen, wodurch dann bodenschonender gefahren wird, weil die spezifische Belastung des Bodens 10 verringert wird. Andererseits kann der Reifendruck erhöht werden, wenn die Eindringtiefe einen vorgegebenen Grenzwert unterschreitet. Hierdurch senkt sich der Energieverbrauch der Arbeitsmaschine 1 und die Reifen 3 werden geschont.

Wie in Fig. 1 zu sehen ist eine besondere Ausführungsform des Verfahrens, dass der optische Sensor 2 die Wölbung 6 des Reifens 3 an der Reifenaufstandsfläche erfasst. Passiert sie eine vorgegebene Grenze, so kann der Reifen 3 Schaden nehmen. Der Druck kann nicht weiter abgesenkt werden. Je nach Auslegung des Systems nach der Bildanalyseeinrichtung 20 kann der Fahrer oder die Steuervorrichtung 21 ein Überladefahrzeug rufen, um das Gewicht der Arbeitsmaschine 1 zu verringern.

Ein weiteres Anwendungsbeispiel betrifft die genauere Schlupfregelung für die Bodenbearbeitung. Bei der Bodenbearbeitung ist der Schlupf eine wichtige Größe, um die Bodenschäden gering und den Kraftstoffverbrauch niedrig zu halten. Ist die Rotationsgeschwindigkeit des Reifens 3 größer als die tatsächliche Vorwärtsbewegung, so kann die Steuervorrichtung 21 reagieren. Es kann den Reifendruck absenken, um die Aufstandsfläche des Reifens 3 zu erhöhen, es kann die Arbeitsgeschwindigkeit der Arbeitsmaschine 1 verringern, um den Boden weniger zu belasten, es kann die Differentialsperre einschalten oder den Allradantrieb hinzu schalten.

Umgekehrt verläuft es beim Ausbringen von zum Beispiel Gülle auf einem Feld. Hierbei ist die Anfangsbelastung einer Zugmaschine hoch und die Zugmaschine arbeitet mit möglichst geringem Reifendruck und eventuell mit Allradantrieb. Im Laufe des Ausbringens verringert sich die Last, so dass der Allradantrieb ausgeschaltet werden und danach der Reifendruck langsam erhöht werden kann, was Energie der Zugmaschine einspart, die Reifen schont und die Wartezeit zur späteren Straßenbefahrung mit hohem Reifendruck verringert.

Ein drittes Anwendungsbeispiel ist die automatische Allradzuschaltung. Da der Allradantrieb mehr Leistung verbraucht, sollte er nur zugeschaltet werden, wenn die Bodenverhältnisse dies erfordern. Abhängig vom Schlupf, der Drift und/oder der Tiefe der Spur 4 kann der Allradantrieb zu- oder abgeschaltet werden. Bei manchen Bodengegebenheiten reicht es schon aus, die Differentialsperre einzuschalten, um die Fahrt der landwirtschaftlichen Arbeitsmaschine 1 zu stabilisieren. Die Steuervorrichtung 21 kann in Abhängigkeit von den Bodenverhältnissen ebenso die Differentialsperre steuern.

Ein viertes Anwendungsbeispiel stellt ein genauerer Lenkautomat dar. Für Lenkautomaten ist eine Driftkorrektur notwendig, um zum Beispiel am Seitenhang oder wenn nichtmittige Zugkräfte entstehen, die Geradeausfahrt der Arbeitsmaschine zu korrigieren. Dazu wird ein Mittenversteller benutzt. Bei häufig wechselnder Drift, wie es zum Beispiel in gebirgigen Regionen oft vorkommt, ist die Einstellungskorrektur so aufwändig, dass der Lenkautomat in der Regel ausgeschaltet wird, da die Korrekturbefehle stark verzögert gegeben werden und der Lenkautomat dadurch zu langsam reagiert. Die Messung der Drift am Reifen 3 erlaubt der Steuervorrichtung 21, unmittelbar auf eine Veränderung der Drift zu reagieren und so den Einsatz der Lenkautomaten selbst in schwierigstem Gelände zu ermöglichen.

Ein fünftes Anwendungsbeispiel betrifft die Hinderniserkennung bei Rückwärtsfahrten. Bei Rückwärtsfahrten wird der Bereich "vor" dem Reifen 3 beobachtet. Eine Abweichung der "Spurtiefe", die den Bereich darstellt, in den der Reifen 3 rollen wird, ist ein Hindernis. Die Größe des Hindernisses kann bei Überschreitung der Grenzwerte einen Alarm auslösen. Eine besondere Ausführungsform der Vorrichtung ist dadurch gekennzeichnet, dass der optische Sensor 2 infrarotempfindlich ist. Damit können Menschen oder Tiere vor dem Rad sofort erkannt werden, und die Steuervorrichtung 21 kann ein Überfahren durch einen automatischen Maschinenstop verhindern.

Ein sechstes Anwendungsbeispiel ist die Kartierung der Fahrspureigenschaften. Bei feuchten Bodenverhältnissen können tiefe Fahrspuren entstehen. Hier kann sowohl der Boden in unteren Schichten verdichtet werden, wie auch das Material in der Spur zur Seite verdrängt werden. Neben den unter dem ersten Anwendungsbeispiel genannten Reaktionsmöglichkeiten aus den vom Sensor 2 und der Bildanalyseeinrichtung 20 gewonnenen Daten kann eine Kartierung der Spurtiefe und/oder der Bodenverdrängung 7 erfolgen, sodass zu einem späteren Zeitpunkt die besonders betroffenen Stellen gezielt bearbeitet werden können. Die Daten können in der Steuervorrichtung 21 der landwirtschaftlichen Arbeitsmaschine 1 gespeichert oder alternativ über Funk 23 an eine externe Datenverarbeitungseinrichtung übergeben werden.

Die Siloverdichtungsanzeige stellt eine weitere Anwendung dar. Beim Festfahren auf einem Silo ist es wichtig zu wissen, wie gut die Verdichtung des Materials ist. Die Eindringtiefe der Arbeitsmaschine in das Silomaterial ist ein Maß für die Verdichtung.

Wird eine gegebene Eindringtiefe unterschritten, wird das Material unter der Spur als ausreichend verdichtet betrachtet. Bei einer Kartierung der Eindringtiefe wird so dem Fahrer gezeigt, an welchen Stellen eine weitere Verdichtung noch notwendig ist.

Diese Anwendungsbeispiele sind exemplarisch, aber in keiner Weise erschöpfend; andere Anwendungen sind nicht vom Schutzumfang der Ansprüche ausgeschlossen.

### Bezugszeichenliste

- 1: landwirtschaftliche Arbeitsmaschine, selbstfahrend
- 2: optischer Sensor
- 3: Reifen
- 4: Spur
- 5: Sichtbereich des Sensors
- 6: Reifenverformung am Boden
- 7, 7': Bodenverdrängung
- 8, 8': Rand der Spur 4
- 10: Boden neben der Spur
- 11: Stollenprofil
- 12: Stollenabdrücke
- 15: Referenzfläche des Bodens 10
- 16: Referenzfläche des Reifens 3
- 17: Referenzfläche der Spur 4
- 20: Bildanalyseeinrichtung
- 21: Steuervorrichtung
- 22: Anzeigedisplay für den Fahrer
- 23: Funkverbindung zu einem externen Empfänger

## Patentansprüche

1. Verfahren zur Überwachung der Befahrbarkeit des Bodens (10) durch eine selbstfahrenden landwirtschaftlichen Arbeitsmaschine (1), die mit mindestens einem optischen Sensor (2) ausgestattet ist, **dadurch gekennzeichnet, dass** wenigstens eine von einem Reifen (3) der Arbeitsmaschine (1) hinterlassene Spur (4) sowie auch der Boden (10) neben der Spur (4) durch den mindestens einen Sensor zumindest abschnittsweise optisch erfasst wird und dass durch Bildauswertung Rückschlüsse auf die Bodenbeschaffenheit gezogen werden.

2. Verfahren nach Anspruch 1, **dadurch gekennzeichnet, dass** die ermittelten Informationen über die Bodenbeschaffenheit für das Betreiben der Arbeitsmaschine (1) herangezogen werden.

3. Verfahren nach einem der vorangegangenen Ansprüche, **dadurch gekennzeichnet, dass** mindestens der untere Teil des Reifens (3) erfasst wird.

4. Verfahren nach Anspruch 3, **dadurch gekennzeichnet, dass** die Wölbung (6) des Reifens (3) an der Reifenaufstandsfläche erfasst wird.

5. Verfahren nach einem der vorangegangenen Ansprüche, **dadurch gekennzeichnet, dass** die Verdrängung des Bodens (7) neben der Fahrspur (4) zumindest einseitig erfasst wird.

6. Verfahren nach einem der vorangegangenen Ansprüche, **dadurch gekennzeichnet, dass** die Rückschlüsse auf die Bodenbeschaffenheit auf die Bodenkartierung herangezogen werden.

7. Verfahren nach einem der vorangegangenen Ansprüche, **dadurch gekennzeichnet, dass** die Rückschlüsse auf die Bodenbeschaffenheit zur Information weiterer Arbeitsmaschinen genutzt werden.

8. Vorrichtung zur Überwachung der Befahrbarkeit des Bodens (10) durch eine selbstfahrenden landwirtschaftlichen Arbeitsmaschine (1),umfassend
- mindestens einen optischen Sensor (2), der wenigstens eine von einem Reifen (3) der Arbeitsmaschine (1) hinterlassene Spur (4) sowie auch den Boden (10) neben der Spur (4) zumindest abschnittsweise optisch erfasst und
- eine Bildanalyseeinrichtung (20), die aus den von dem mindestens einen optischen Sensor (2) erfassten Informationen die Bodenbeschaffenheit repräsentierende Parameter errechnet.

9. Vorrichtung nach Anspruch 8, **dadurch gekennzeichnet, dass** die Parameter der Bodenbeschaffenheit durch eine Steuerungsvorrichtung (21) der Arbeitsmaschine (1) verarbeitbar sind und dass diese Parameter von der Steuerungsvorrichtung (21) zur Steuerung der Arbeitsmaschine (1) verwendbar sind.

10. Vorrichtung nach einem der Ansprüche 8 bis 9, **dadurch gekennzeichnet, dass** der optische Sensor (2) eine Kamera ist.

11. Vorrichtung nach Anspruch 10, **dadurch gekennzeichnet, dass** der optische Sensor (2) eine 3D-Kamera ist.

12. Vorrichtung nach einem der Ansprüchen 8 bis 11, **dadurch gekennzeichnet, dass** der optische Sensor (2) infrarotempfindlich ist.

## Claims

1. Method for monitoring the driveability of the ground (10) by a self-propelled agricultural work machine (1) which is equipped with at least one optical sensor (2), **characterized in that** at least one track (4) left behind by a tyre (3) of the work machine (1) as well as the ground (10) next to the track (4) is optically captured at least in sections by the at least one sensor and **in that** conclusions about the ground conditions are drawn through image analysis.

2. Method according to claim 1, **characterized in that** the ascertained information about the ground conditions are used for the operation of the work machine (1).

3. Method according to one of the previous claims, **characterized in that** at least the lower part of the tyre (3) is captured.

4. Method according to claim 3, **characterized in that** the curvature (6) of the tyre (3) at the tyre contact area is captured.

5. Method according to one of the previous claims, **characterized in that** the displacement of the ground (7) next to the track (4) is captured at least on one side.

6. Method according to one of the previous claims, **characterized in that** the conclusions about the ground conditions are taken into consideration for the ground mapping.

7. Method according to one of the previous claims, **characterized in that** the conclusions about the ground conditions are used for information for further work machines.

8. Device for monitoring the driveability of the ground (10) by a self-propelled agricultural work machine (1), comprising
- at least one optical sensor (2) which optically captures, at least in sections, at least one track (4) left behind by a tyre (3) of the work machine (1) as well as the ground (10) next to the track (4) and
- an image analysis device (20) which calculates parameters representing the ground conditions from the information captured by the at least one optical sensor (2).

9. Device according to claim 8, **characterized in that** the parameters of the ground conditions can be processed by a control device (21) of the work machine (1) and **in that** these parameters can be used by the control device (21) for controlling the work machine (1).

10. Device according to one of claims 8 to 9, **characterized in that** the optical sensor (2) is a camera.

11. Device according to claim 10, **characterized in that** the optical sensor (2) is a 3D camera.

12. Device according to one of claims 8 to 11, **characterized in that** the optical sensor (2) is infrared-sensitive.

## Revendications

1. Procédé pour la surveillance de la praticabilité du sol (10) par une machine de travail agricole automotrice (1) qui est équipée d'au moins un capteur optique (2), **caractérisé en ce qu'**au moins une trace (4) laissée par le pneumatique (3) de la machine de travail (1) ainsi que le sol (10) à côté de la trace (4) sont palpés optiquement au moins par endroits par le au moins un capteur, et **en ce que** des conclusions sont tirées sur la nature du sol par l'intermédiaire d'une analyse d'images.

2. Procédé selon la revendication 1, **caractérisé en ce que** les informations obtenues sur la nature du sol sont exploitées pour le fonctionnement de la machine de travail (1).

3. Procédé selon une des revendications précédentes, **caractérisé en ce qu'**au moins la partie inférieure du pneumatique (3) est palpée.

4. Procédé selon la revendication 3, **caractérisé en ce que** le bombé (6) du pneumatique (3) est palpé au niveau de la surface d'appui du pneumatique.

5. Procédé selon une des revendications précédentes, **caractérisé en ce que** le refoulement du sol (7) à côté de la trace de passage (4) est palpé au moins d'un côté.

6. Procédé selon une des revendications précédentes, **caractérisé en ce que** les conclusions sur la nature du sol sont exploitées pour la cartographie du sol.

7. Procédé selon une des revendications précédentes, **caractérisé en ce que** les conclusions sur la nature du sol sont utilisées pour l'information d'autre machines de travail.

8. Dispositif pour la surveillance de la praticabilité du sol (10) par une machine de travail agricole automotrice (1), comprenant
- au moins un capteur optique (2) qui, au moins par endroits, palpe optiquement au moins une trace (4) laissée par un pneumatique (3) de la machine de travail (1) ainsi que le sol (10) à côté de la trace (4) et
- un équipement d'analyse d'images (20) qui, à partir des informations palpées par le au moins un capteur optique (2), calcule les paramètres représentant la nature du sol.

9. Dispositif selon la revendication 8, **caractérisé en ce que** les paramètres de la nature du sol sont traitables par un dispositif de commande (21) de la machine de travail (1), et **en ce que** ces paramètres sont utilisables par le dispositif de commande (21) pour commander la machine de travail (1).

10. Dispositif selon une des revendications 8 à 9, **caractérisé en ce que** le capteur optique (2) est une caméra.

11. Dispositif selon la revendication 10, **caractérisé en ce que** le capteur optique (2) est une caméra 3D.

12. Dispositif selon une des revendications 8 à 11, **caractérisé en ce que** le capteur optique (2) est sensible aux infrarouges.
